(19) 

Europäisches
Patentamt

European
Patent Office

Office européen
des brevets

(11) **EP 3 252 364 B1**

(12) **EUROPEAN PATENT SPECIFICATION**

(45) Date of publication and mention
of the grant of the patent:
**27.03.2019   Bulletin 2019/13**

(51) Int Cl.:
***F16P 3/14*** *(2006.01)*

(21) Application number: **17173669.7**

(22) Date of filing: **31.05.2017**

(54) **RADAR APPARATUS FOR FORMING A PROTECTION LINEAR BARRIER AND RELATED SYSTEM**

RADARVORRICHTUNG ZUR BILDUNG EINER LINEAREN SCHUTZBARRIERE UND ZUGEHÖRIGES SYSTEM

APPAREIL RADAR POUR LA FORMATION D'UNE BARRIÈRE LINÉAIRE DE PROTECTION ET SYSTÈME RÉLATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2016   IT UA20163987**

(43) Date of publication of application:
**06.12.2017   Bulletin 2017/49**

(73) Proprietor: **Inxpect S.p.A.**
**25125 Brescia (BS) (IT)**

(72) Inventors:
• **Tartaro, Andrea**
  **25125 Brescia BS (IT)**
• **Garatti, Marco**
  **25125 Brescia BS (IT)**

(74) Representative: **Perani & Partners S.p.A.**
**Piazza Armando Diaz, 7**
**20123 Milano (IT)**

(56) References cited:
**US-A1- 2010 201 561     US-A1- 2013 094 705**
**US-B2- 7 783 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a radar apparatus for forming a linear barrier protecting a secure area. The invention further relates to a plant that comprises a security monitoring system.

Particularly, the present invention finds application in the manufacturing industry. Various mechanisms are used in the manufacturing industry for protecting operators from hazards associated with moving equipment and tools.

Metal gratings are often used, which physically protect operators from contact with hazardous areas. Nevertheless, these mechanisms cannot be used in product loading and unloading areas, i.e. when operators are required to quickly come into and out of the hazardous areas, e.g. for quicker maintenance or for direct observation of the processing cycles.

Here, the security mechanisms in use in industry are based on virtual barriers formed by infrared transmitter/receiver pairs, or rotating laser heads. The access area may be protected by a virtual barrier, realized by an array of infrared transmitters, and vertically arranged on one side of the opening, and an analogous array of infrared receivers arranged on the opposite side, which will provide a secure area having a predetermined depth. When one of the rays is broken by the passage of an operator, the security systems of the machine are actuated to eliminate the hazard, i.e. by slowing down or stopping the machining operations. In certain cases, the access area is entirely protected by a horizontal arrangement of the aforementioned arrays, which will afford detection of operators both as they access the secure area and as they remain therein.

Laser head systems provide a similar ability of creating virtual flat barriers, while affording the additional benefit of accurately configuring their shape, unlike infrared barriers, which can only have the shape of a right quadrilateral.

Since they are based on optical technologies, resistance to harsh industrial environments of both methods for making virtual security barriers is often greatly limited. For example, when processing involves the creation of dust, liquid splashes or smoke, virtual barriers based on optical technologies detect such disturbances as false alarms, with unnecessary downtimes.

The operation of infrared-based barriers requires perfect alignment of the transmitter and the receiver. Impacts on one of these two parts often cause misalignment, whereby maintenance is frequently required for calibration, before restarting production.

US 7,783,386 which is considered to be the closest prior art, discloses a system and a method for selectively monitoring the hazardous working area of an industrial robot. The use of proximity sensors, here based on microwave FMCW or ultrasound technologies allows the definition of safety zones and danger zones within the working area of the robot, such that human operators may safely coexist with the machine. By processing the signals from these sensors and correlating them with the position sensors of the robot, US 7,783,386 allows the robot to carry out its processing tasks in a definite area, while the operator may be in an adjacent area. US 7,783,3386 uses arrays of microwave (FMCW) or ultrasound sensors to cover the working area in which the robot and the human operator are required to coexist, such that the area covered by a given sensor is directly adjacent to the one that is covered by the next sensor.

US 2010/0201561 discloses a device for detecting movements into and out of a guarded zone. The device comprises a plurality of stand-alone electromagnetic sensors, arranged along a perimeter of a guarded zone, such that the spaces covered by the sensors are in partially overlapping relationship, and a control unit connected to the sensors, with the sensors measuring the angular position and the speed of an intruder, and with measurements being collected by the control unit from successive sensors, to determine the speed and path of the detected intruder.

The Applicant found that the arrangement of radar sensors along a perimeter line at which the barrier is designed to be created is hardly feasible in the manufacturing industry, for instance in the loading/unloading zones of the factory, which often require the passage of people or handling equipment proximate secure areas.

One object of the present invention is to provide a system that can form a linear barrier protecting a working zone of a machine, to prevent an operator to access such zone.

The Applicant considered monitoring of working zones extending in at least one direction, and containing equipment or machines for production systems having multiple working steps.

The present invention further provides a plant as defined in Claim 1.

Brief description of the figures

Further characteristics and advantages of the apparatus of the present invention will be apparent from the following description of one preferred embodiment thereof, which is given by way of illustration and without limitation with reference to the accompanying figures, in which:

- Figure 1 shows a schematic view of an apparatus according to one embodiment of the present invention,
- Figure 2 shows a detail of the apparatus of Figure 1, and
- Figure 3 shows a schematic view of a plant that comprises a security monitoring system according to one embodiment.

Detailed description

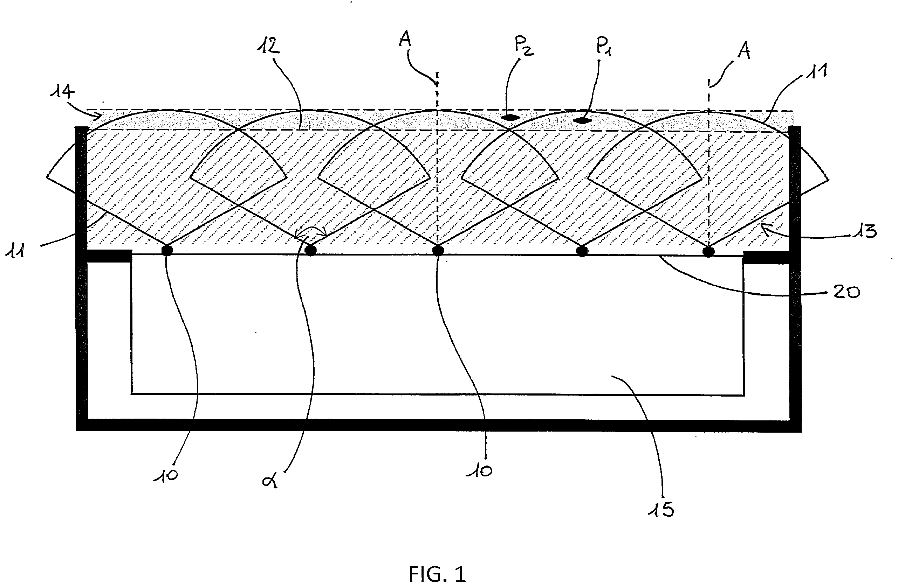

Figure 1 shows at radar apparatus 1 according to one embodiment of the present invention, for forming a security barrier for a secure area, for example for protecting an area for access to a machine tool.

The radar apparatus 1 comprises a plurality of radar sensors 10 arranged in side-by-side relationship along the security line 20 at a transverse distance b from each other along such security line 20.

In the embodiment as shown in the figures, the security line 20 defines a straight direction and the plurality of sensors forms an array of sensors.

The security line 20 may be disposed within a working zone of an automatically operating machine (not shown).

The radar sensors are configured to transmit radio-frequency electromagnetic signals, in short RF signals, and to receive and analyze return electromagnetic signals generated by reflection thereof upon objects.

The radar sensors 10 are monostatic radar sensors. Generally, monostatic radar sensors have a single receiving and transmitting antenna and do not generally have beam forming and beam steering capabilities. Monostatic sensors have the advantages of having a relatively low cost and being easily manufactured. Furthermore, these radar sensors are affected to a small or anyway insignificant extent by environmental conditions, particularly smoke, splashes and dust, and are then particularly suitable for use in an industrial environment. The monostatic radar sensors of the apparatus 1 are configured to detect the distance of a moving object in the area covered by the signals transmitted by their antenna. As used in the present invention and the following description, the term object designates both an object and a person. The resolution of such measurement is directly proportional to the band used by the radio waves emitted by the radar sensor.

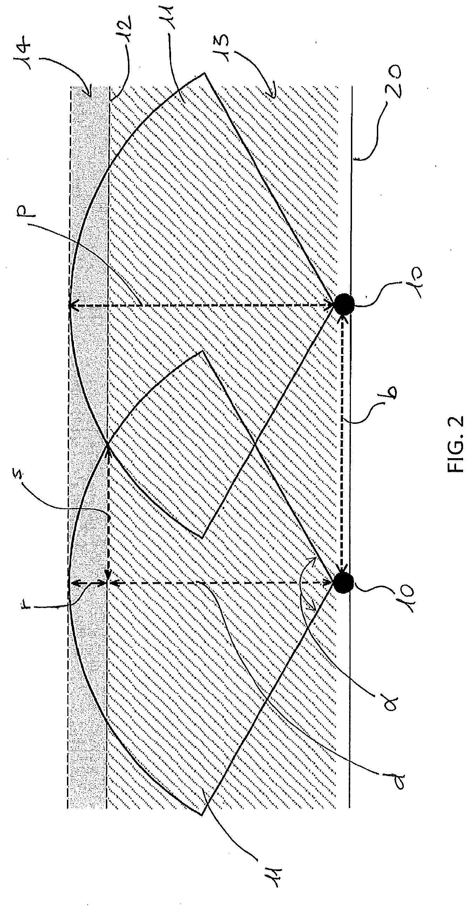

Each radar sensor 10 is configured to generate, along a respective main direction of transmission, an electromagnetic signal in which the spatial distribution of the field radiated by the antenna forms a main lobe. Each of the main lobes defines, in one plane, the area that is reached by the electromagnetic signal emitted by its respective radar sensor (i.e. by the antenna of its respective sensor), in which the reflection of such electromagnetic signal can be discriminated. Particularly, the main lobe defines an observation field 11, defined by the radiation diagram of the sensor antenna on a plane that comprises the direction of maximum intensity of the radiation or captured signal, here indicated by the axis A. Typically, the detection depth (or depth of field) of the electromagnetic signal emitted by a radar sensor defines a curve that is approximated by a circular arc in Figures 1 and 2. It is to be understood that spatial distributions as shown in the figures are schematic representations and may not depict the real shape of a radiation diagram. The detection depth of the observation field 11 along the axis A, i.e.the maximum field penetration, is designated by p (Fig. 2). Beyond the distance p, the probability for a sensor to detect the target is substantially equal to zero.

Preferably, the radar sensors arranged along a straight security line are at equal distances from each other.

If the security line 20 has a straight direction, the maximum radiation axis A of each radar sensor 10 will be perpendicular to the security line 20. The axes A of the radar sensors 10 are parallel.

The sensors are arranged at a transverse distance b from each other. The separation b between adjacent radar sensors 10 is selected for the observation fields 11 of two adjacent radar sensors 10 to overlap over a portion thereof. Particularly, the observation fields 11 of two adjacent radar sensors 10 cross each other at a longitudinal distance d, as measured from the security line 20 in the direction of the axis A, and at a transverse distance s, as measured in a direction perpendicular to the axis A and parallel to the security line 20. The sequence of the observation fields 11 of the radar sensors 10 along the security line 20 virtually defines a continuous linear barrier 12 which extends parallel to the security line 20 at a distance from the security line 20 that is equal to the longitudinal distance d. Preferably, the sensors of the plurality of sensors of the radar apparatus 1 are configured to emit transmission signals with substantially equal radiation diagrams. In particular, the observation field of the sensors have substantially equal (and preferably equal) aperture angles $\alpha$ and substantially equal, preferably equal detection depths p along the direction of maximum radiation (axis A). In one embodiment, the observation fields of the sensors have equal aperture angles $\alpha$ and equal detection depths p.

Preferably, the distance b between two adjacent sensors is equal to 2s, i.e. the partially overlapping adjacent observation fields cross each other at a transverse distance between two adjacent sensors that is equal to half the distance b.

In a particularly preferred embodiment, the radar sensors are at equal distances from each other and are configured to have respective observation fields 11 of equal field depths, such that the distance d along a direction parallel to the axis A, at which the fields 11 of two adjacent sensors cross each other is substantially equal (preferably equal) for each sensor. In one embodiment, the distance d ranges from 1 m to 10 m.

The area between the linear barrier 12 and the security line 20 defines a secure area 13 of the radar apparatus, in which the probability of detecting an object is substantially equal to 1.

The area outside the linear barrier 12 comprises an area 14, designated as transition area, which extends from the linear barrier 12, in a direction parallel to the security line (along the axis A), to a depth r. In the transition area, an object located in point PI, in the field of a sensor 10, can be detected, whereas an object located in point P2 between the observation fields of two adjacent sensors is not detected. Therefore, the probability of detecting one object in the transition area is greater than zero and smaller than 1.

The Applicant realized that a reduction of the transition area affords smaller space waste near the area to be protected, e.g. a working area within a manufacturing station.

Under the assumption that the radar sensors detect a point-like object with infinite precision, the depth r is given by

$$r = p\text{-}d = \sqrt{s^2+d^2}\text{-}d. \qquad (1)$$

Preferably, the radar sensors are based on the FMCW technology. According to international standards, short distance radar systems generally operate at 24 GHz, with a narrow band of frequencies, i.e. from 150 MHz to 250 MHz. The Applicant observed that the use of signals with a relatively narrow band of frequencies may lead to poorer accuracy in measuring distance.

In most cases of interest, the depth of the transition area is given by:

$$r' = r + E = \sqrt{s^2+d^2}\text{-}d + E, \qquad (2)$$

where E is the error introduced into the measurement of the distance of a target by each radar sensor. If the sensors of the plurality are equal, there will be an equal error for each sensor. Generally, the error E is influenced by both accuracy and precision (the variance due to the non-point-like nature of the target).

As the density of the array of radar sensors 10 changes, i.e. as the value b of the transverse distance between two adjacent radar sensors 10 changes, and by setting the longitudinal distance value d as an input value, it is possible to calculate the depth r, excepting error E, i.e. Eq. (1), and thus to select an apparatus configuration that can provide a linear barrier 12 having a reduced depth r of the transition area 14.

Preferably, the r value is equal to or smaller than 80 cm, more preferably ranging from 30 m to 80 cm.

Since many cases of interest shall account for the error E, which increases the depth of the transition area, a reduction or minimization of r' preferably requires a reduction of the E value. The Applicant realized that the error E caused by detection of non-point-like objects, namely a person that comes close to the working zone of a machine, may be decreased by placing the array of sensors at a reduced height from the ground, so that an operator that tries to access the working zone would be promptly detected as/she moves toward the working zone.

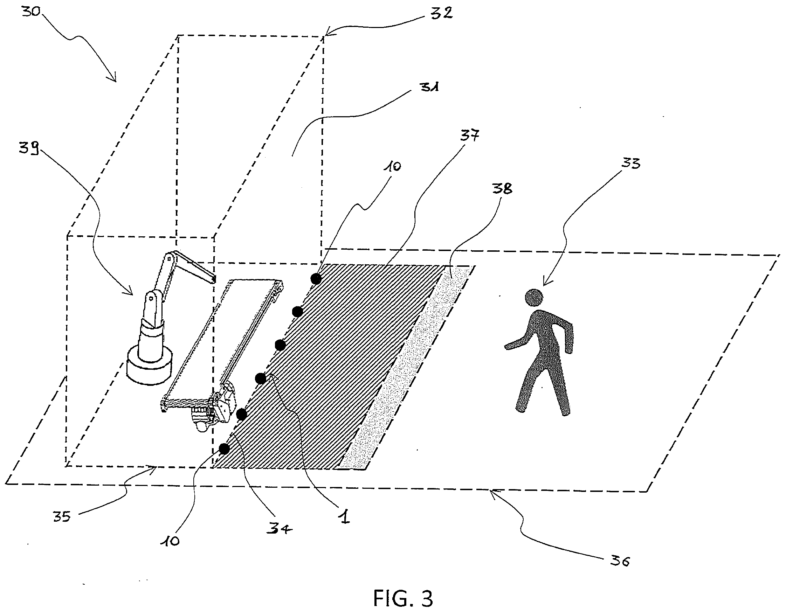

According to the present disclosure, a plant is provided that comprises a system for monitoring a working zone of an equipment or machinery, generally designated herein as machine. Figure 3 shows a schematic perspective view of a plant that comprises a security monitoring system according to one embodiment. A plant 30 comprises an automatically operating machine 39, e.g. an industrial robot operating in a manufacturing station with a conveyor belt. The machine 39 is located in a working zone 32, which is shown in the figure by a broken line. The working zone may be defined as a space in which access by the personal is controlled or prohibited when the machine is in operation. The working zone extends upwards from a base surface 36, corresponding to the walkway surface, and is defined, on the base surface 36, by a perimeter 35, which is shown by a broken line in the figure. The perimeter comprises a side 34 extending in a horizontal direction. From the side 34, the working zone extends upwards along a vertical virtual plane 31.

A radar apparatus 1 is arranged so that the array of sensors 10 will be arranged horizontally along the side 34 of the working zone. The secure area 37 created by the radar apparatus has a length d along a direction perpendicular to the side 34 (coinciding with the security line of the radar apparatus) and is shown in the figure by a hatched area. The transition area 38, whose depth is r', is shown in the figure by a gray area.

Preferably, the array of sensors is disposed in a direction perpendicular to the base surface 36, proximate to the base surface. The array of sensors is placed at a height ranging from 0 to 30 cm from the base surface.

A person 33 that comes toward the working zone 32 enters the observation field of the radar apparatus 1, and is detected with a probability equal to or greater than zero and smaller than 1, when he/she is in the transition zone 38, and with probability of 1 when he/she enters the security zone 37.

The security monitoring system may further comprise warning devices, not shown and known per se, which are connected to the radar apparatus and are configured to warn of the access of a person in the area that is being monitored by the radar sensors.

The plurality of sensors is composed of N sensors. Generally, for the observation fields of adjacent sensors to be in a partially overlapping relationship, to create a continuous linear barrier, the number of sensors is selected according to the aperture angle of the observation fields 11 and to the distance b between adjacent sensors along the security line. With the same aperture angle and the same length of the security line, an increased number of sensors, i.e. a decreased transverse distance between adjacent sensors, will lead to a reduced depth of the transition area.

For instance, for a plurality of 6 sensors having an aperture angle of 80° and arranged in an array having a length of about 6 m and with a transverse distance of 1 m between adjacent sensors, the depth r of the transition area will be equal to about 82 cm, as determined using Eq. (1). Assuming a plurality of 4 sensors having an aperture angle of 80° and arranged in an array having a length of about 6 m and with a distance of 1.5 m between adjacent sensors, the depth r of the transition area will be equal to about 180 cm.

Preferably, the aperture angle $\alpha$ is greater than 40°, more preferably ranging from 80° to 150°. In a particularly preferred embodiment, the aperture angle ranges from 120° to 150°, more preferably from 125° to 150°. A relatively wide aperture angle allows to provide a linear barrier using a relatively small number of sensors.

The radar apparatus 1 of the present invention will particularly afford the formation of a radar sensor-based linear barrier for industrial use, thus insensitive to harsh environmental conditions, such as the presence of processing-related dust, liquids or smoke. Furthermore, since the array of sensors is composed of radar sensors 10, the linear barrier 12 has a modular construction and may be easily extended, if needed, by the addition of radar sensors 10 at a distance b from previously installed radar sensors.

Advantageously, the radar sensors 10 are so configured that the electromagnetic signal generated by one radar sensor 10 will not interfere with the electromagnetic signals generated by the radar sensors 10 adjacent thereto.

In order to prevent the electromagnetic signal generated by a radar sensor 10 from interfering with the electromagnetic signals generated by the radar sensors 10 adjacent thereto, the radar sensors may implement statistical staggering mechanisms as described N. Andersen and T. S. Lande, "Nanoscale Impulse Radar", Novelda White Paper, 9/8/2012, https://www.ntnu.no/wiki/download/attachments/67470221/WhitePaper-NoveldaNanoscaleImpulseRadar_V0107.pdf?version=1&modificationDate=1381493661 000&api=v2.

Preferably the apparatus uses FMCW (*Frequency Modulated Continuous Wave*) sensors in combination with Frequency Division Modulation (FDM) or Time Division Modulation (TDM) techniques.

The present invention uses arrays of monostatic radar sensors to form a linear virtual barrier, particularly for industrial use. Therefore, with as simple and inexpensive devices as possible, the invention can provide a monitoring area with a linear shape, so that the security system will be able to detect the distance (d) of a human operator from the hazardous zone without requiring the coexistence of the operator and the machine.

## Claims

1. A plant (30) comprising:

   - an automatically operating machine (39) situated in a working zone (32) that extends upwards from a base surface (36) along one side (34), and
   - a security monitoring system, which comprises a radar apparatus (1) for forming a linear barrier (12) protecting a secure area (13), said radar apparatus (1) comprising a plurality of sensors (10) arranged along a straight security line (20) at a distance b from each other along said security line (20), wherein
   - each sensor (10) of the plurality of sensors is a monostatic radar sensor configured to generate an electromagnetic signal having an observation field (11) with an aperture angle $\alpha$ and a detection depth that is equal to a longitudinal distance p along a maximum radiation axis (A), each radar sensor being disposed with its maximum radiation axis (A) perpendicular to said security line (20),
   - the observation fields of two adjacent radar sensors (10) overlap over a portion thereof and cross each other at a longitudinal distance d, as measured from the security line (20) in the direction of the axes (A) and at a transverse distance s, as measured in a direction perpendicular to the axes (A) and parallel to said security line (20) between the two respective adjacent radar sensors (10),
   - the succession of observation fields (11) along said security line (20) defines a linear barrier (12) which extends parallel to the security line (20) at a distance from the security line (20) which is equal to the longitudinal distance d and a transition area (14) which extends from the linear barrier (12) to a transition depth equal to a longitudinal distance r along the axis (A), the transition depth being defined by the difference between the detection depth p and the distance d,

   **characterized in that:**

   - the straight security line (20) on which the plurality of sensors (10) are arranged is located along said side (34) at a height ranging from 0 to 30 cm from the base surface (36),
   - the longitudinal distance r of the transition area (14) defined by the radar apparatus is equal to or smaller than 80 cm.

2. A plant (30) as claimed in claim 1, wherein the area between the linear barrier (12) and the security line (20) defines a secure area (13) having a depth d.

3. A plant (30) as claimed in claim 1 or 2, wherein the transverse distance b between adjacent proximate sensors along said security line (20) is equal to twice the transverse distance s at which the observation fields cross each other.

4. A plant (30) as claimed in any of claims 1 to 3, wherein the value r is calculated according to the relation

$$r = \sqrt{s^2 + d^2} - d.$$

5. A plant (30) as claimed in any of claims 1 to 4, wherein the aperture angle $\alpha$ is equal to or greater than 80°, preferably equal to or greater than 120°.

6. A plant (30) as claimed in any of claims 1 to 5, wherein the aperture angle $\alpha$ is from 120° to 150°.

7. A plant (30) as claimed in any of claims 1 to 6, wherein the radar sensors are at equal distances from each other and are configured to have respective observation fields (11) of equal field depths p, such that the longitudinal distance d at which the lobes of two adjacent sensors cross each other and the transition depth r are substantially equal for each sensor of the plurality of radar sensors.

8. A plant (30) as claimed in any of claims 1 to 7, wherein the radar sensors are at equal distances from each other and are configured to have respective observation fields (11) of equal field depths p, such that the distance d at which the observation fields of two adjacent sensors cross each other are substantially equal for each sensor.

9. A plant (30) as claimed in any of claims 1 to 8, wherein each sensor (10) is a monostatic FMCW sensor.

10. A plant (30) as claimed in claim 1, wherein the straight security line (20) is arranged on the base surface (36) or parallel to it.

11. A plant (30) as claimed in any of claims 1 to 10, wherein the longitudinal distance r of the transition area (14) is from 30 cm to 80 cm.

12. A plant (30) as claimed in any of claims 1 to 11, wherein the working zone (32) is defined, on the base surface 36, by an area enclosed by a perimeter (35) which comprises said side (34).

**Patentansprüche**

1. Anlage (30) umfassend:

- eine automatische Arbeitsmaschine (39), die in einem sich von der Basisfläche (36) entlang einer Seite (34) nach oben erstreckenden Arbeitsbereich (32) angeordnet ist, und
- ein Sicherheitsüberwachungssystem, das ein Radargerät (1) umfasst, um eine lineare Barriere (12) zum Schutz eines Sicherheitsbereichs (13) zu bilden, wobei das Radargerät (1) eine Mehrzahl von Sensoren (10) umfasst, die entlang einer geraden Linie (20) in einem Abstand b voneinander entlang der Sicherheitslinie (20) angeordnet sind, wobei
- jeder Sensor (10) der Mehrzahl von Sensoren ein monostatischer Radarsensor ist, der ausgestaltet ist, um ein elektromagnetisches Signal mit einem Beobachtungsfeld (11) mit einem Öffnungswinkel $\alpha$ und einer Ortungstiefe zu erzeugen, die gleich einem Längsabstand p entlang einer maximalen Strahlungsachse (A) ist, wobei jeder Radarsensor mit seiner maximalen Strahlungsachse (A) senkrecht zu der Sicherheitslinie (20) angeordnet ist,
- die Beobachtungsfelder von zwei benachbarten Radarsensoren (10) sich in einem Abschnitt davon kreuzen und sich in einem von der Sicherheitslinie (20) in Richtung der Achsen (A) gemessenen Längsabstand d und in einem senkrecht zu den Achsen (A) und parallel zu der Sicherheitslinie (20) zwischen den beiden benachbarten Radarsensoren (10) gemessenen Querabstand s kreuzen,
- die Reihenfolge der Beobachtungsfelder (11) entlang der Sicherheitslinie (20) eine lineare Barriere (12) definiert, die sich parallel zu der Sicherheitslinie (20) in einem Abstand von der Sicherheitslinie (20) erstreckt, der gleich dem Längsabstand d ist, und einen Übergangsbereich (14), der sich von der linearen Barriere (12) in eine Übergangstiefe erstreckt, die gleich einem Längsabstand r entlang der Achse (A) ist, wobei die Übergangstiefe durch die Differenz zwischen der Ortungstiefe p und dem Abstand d definiert ist,

**dadurch gekennzeichnet, dass:**

- die gerade Sicherheitslinie (20), auf der die Mehrzahl von Sensoren (10) angeordnet ist, entlang der Seite (34) auf einer Höhe im Bereich von 0 bis 30 cm von der Basisfläche (36) angeordnet ist,
- der Längsabstand r des Übergangsbereichs (14), der durch das Radargerät definiert ist, kleiner oder gleich 80 cm ist.

2. Anlage (30) nach Anspruch 1, wobei der Bereich zwischen der linearen Barriere (12) und der Sicherheitslinie (20) einen Sicherheitsbereich (13) mit einer Tiefe d definiert.

3. Anlage (30) nach Anspruch 1 oder 2, wobei der Querabstand b zwischen benachbarten Näherungssensoren entlang der Sicherheitslinie (20) gleich dem zweifachen Querabstand s ist, an dem die Beobachtungsfelder sich gegenseitig kreuzen.

4. Anlage (30) nach einem der Ansprüche 1 bis 3, wobei der Wert r gemäß der Beziehung $r = \sqrt{s^2 + d^2} - d$ berechnet wird.

5. Anlage (30) nach einem der Ansprüche 1 bis 4, wobei der Öffnungswinkel $\alpha$ größer oder gleich 80°, vorzugsweise größer oder gleich 120° ist.

6. Anlage (30) nach einem der Ansprüche 1 bis 5, wobei der Öffnungswinkel $\alpha$ im Bereich von 120° bis 150° liegt.

7. Anlage (30) nach einem der Ansprüche 1 bis 6, wobei die Radarsensoren voneinander gleich beabstandet und ausgestaltet sind, um jeweilige Beobachtungsfelder (11) gleicher Feldtiefe p aufzuweisen, derart, dass der Längsabstand d, an dem die Keulen zweier benachbarter Sensoren einander kreuzen, und die Übergangstiefe r bei jedem Sensor der Mehrzahl von Radarsensoren im Wesentlichen gleich sind.

8. Anlage (30) nach einem der Ansprüche 1 bis 7, wobei die Radarsensoren voneinander gleich beabstandet und ausgestaltet sind, um jeweilige Beobachtungsfelder (11) gleicher Feldtiefe p aufzuweisen, derart, dass der Abstand d, an dem die Beobachtungsfelder zweier benachbarter Sensoren einander kreuzen, bei jedem Sensor im Wesentlichen gleich sind.

9. Anlage (30) nach einem der Ansprüche 1 bis 8, wobei jeder Sensor (10) ein monostatischer FMCW-Sensor ist.

10. Anlage (30) nach Anspruch 1, wobei die gerade Sicherheitslinie (20) auf der Basisfläche (36) oder parallel zu ihr angeordnet ist.

11. Anlage (30) nach einem der Ansprüche 1 bis 10, wobei der Längsabstand r des Übergangsbereichs (14) 30 cm bis 80 cm beträgt.

12. Anlage (30) nach einem der Ansprüche 1 bis 11, wobei der Arbeitsbereich (32) auf der Basisfläche (36) durch einen Bereich definiert ist, der von einem Umfang (35) umschlossen ist, der die Seite (34) umfasst.


**Revendications**

1. Installation (30) comprenant :

- une machine de travail automatique (39) située dans une zone de travail (32) qui s'étend vers le haut à partir d'une surface de base (36) le long d'un côté (34), et
- un système de surveillance de sécurité, qui comprend un appareil radar (1) destiné à former une barrière linéaire (12) protégeant une zone sécurisée (13), ledit appareil radar (1) comprenant une pluralité de capteurs (10) agencés le long d'une ligne de sécurité droite (20) à une distance b les uns des autres le long de ladite ligne de sécurité (20), dans laquelle

- chaque capteur (10) de la pluralité de capteurs est un capteur radar monostatique configuré pour générer un signal électromagnétique ayant un champ d'observation (11) avec un angle d'ouverture $\alpha$ et une profondeur de détection qui est égale à une distance longitudinale p le long d'un axe de rayonnement maximal (A), chaque capteur radar étant disposé avec son axe de rayonnement maximal (A) perpendiculaire à ladite ligne de sécurité (20),
- les champs d'observation de deux capteurs radar adjacents (10) se chevauchant sur une partie de ceux-ci et se croisant mutuellement à une distance longitudinale d, mesurée depuis la ligne de sécurité (20) dans la direction des axes (A) et à une distance transversale s, mesurée dans une direction perpendiculaire aux axes (A) et parallèle à ladite ligne de sécurité (20) entre les deux capteurs radar adjacents respectifs (10),
- la succession de champs d'observation (11) le long de ladite ligne de sécurité (20) définit une barrière linéaire (12) qui s'étend de manière parallèle à la ligne de sécurité (20) à une distance de la ligne de sécurité (20) qui est égale à la distance longitudinale d et une zone de transition (14) qui s'étend de la barrière linéaire (12) à une profondeur de transition égale à une distance longitudinale r le long de l'axe (A), la profondeur de transition étant définie par la différence entre la profondeur de détection p et la distance d,

**caractérisée en ce que :**

- la ligne de sécurité droite (20) sur laquelle la pluralité de capteurs (10) sont agencés est située le long dudit côté (34) à une hauteur comprise entre 0 et 30 cm de la surface de base (36),
- la distance longitudinale r de la zone de transition (14) définie par l'appareil radar est inférieure ou égale à 80 cm.

2. Installation (30) selon la revendication 1, dans laquelle la zone entre la barrière linéaire (12) et la ligne de sécurité (20) définit une zone sécurisée (13) ayant une profondeur d.

3. Installation (30) selon la revendication 1 ou 2, dans laquelle la distance transversale b entre des capteurs proches adjacents le long de ladite ligne de sécurité (20) est égale à deux fois la distance transversale s à laquelle les champs d'observation se croisent mutuellement.

4. Installation (30) selon l'une quelconque des revendications 1 à 3, dans laquelle la valeur r est calculée selon la relation $r = \sqrt{s^2 + d^2} - d$.

5. Installation (30) selon l'une quelconque des revendications 1 à 4, dans laquelle l'angle d'ouverture $\alpha$ est supérieur ou égal à 80°, de préférence supérieur ou égal à 120°.

6. Installation (30) selon l'une quelconque des revendications 1 à 5, dans laquelle l'angle d'ouverture $\alpha$ est compris entre 120° et 150°.

7. Installation (30) selon l'une quelconque des revendications 1 à 6, dans laquelle les capteurs radar sont équidistants les uns des autres et sont configurés pour avoir des champs d'observation respectifs (11) d'égales profondeurs de champ p, de telle sorte que la distance longitudinale d à laquelle les lobes de deux capteurs adjacents se croisent mutuellement et la profondeur de transition r sont sensiblement égales pour chaque capteur de la pluralité de capteurs radar.

8. Installation (30) selon l'une quelconque des revendications 1 à 7, dans laquelle les capteurs radar sont équidistants les uns des autres et sont configurés pour avoir des champs d'observation respectifs (11) d'égales profondeurs de champ p, de telle sorte que la distance d à laquelle les champs d'observation de deux capteurs adjacents se croisent mutuellement est sensiblement égale pour chaque capteur.

9. Installation (30) selon l'une quelconque des revendications 1 à 8, dans laquelle chaque capteur (10) est un capteur FMCW monostatique.

10. Installation (30) selon la revendication 1, dans laquelle la ligne de sécurité droite (20) est agencée sur la surface de base (36) ou parallèle à celle-ci.

11. Installation (30) selon l'une quelconque des revendications 1 à 10, dans laquelle la distance longitudinale r de la zone de transition (14) est comprise entre 30 cm et 80 cm.

12. Installation (30) selon l'une quelconque des revendications 1 à 11, dans laquelle la zone de travail (32) est définie, sur la surface de base (36), par une zone encerclée par un périmètre (35) qui comprend ledit côté (34).

FIG. 1

EP 3 252 364 B1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7783386 B
- US 77833386 B

- US 20100201561 A

**Non-patent literature cited in the description**

- **N. ANDERSEN ; T. S. LANDE.** Nanoscale Impulse Radar. *Novelda White Paper,* 09 August 2012, https://www.ntnu.no/wiki/download/attachments/67470221/WhitePaper-NoveldaNanoscaleImpulseRadar_V0107.pdf?version=1&modificationDate=1381493661000&api=v2